# EUROPÄISCHE PATENTSCHRIFT

(11) **EP 0 730 181 B1**
(45) Veröffentlichungstag und Bekanntmachung des Hinweises auf die Patenterteilung: **20.12.2000**
(21) Anmeldenummer: 96103212.5
(22) Anmeldetag: 01.03.1996
(51) Int. Cl.: G02B 21/22, G02B 27/22

(54) **Verfahren zur Erzeugung des stereoskopischen Bildes eines Objektes sowie Anordnung zur stereoskopischen Betrachtung**
Method of producing a stereoscopic image from an object and device for stereoscopic viewing
Méthode de produire des images téléscopiques d'un objet et dispositif pour regarder des images stéréoscopiques

(30) Priorität: 02.03.1995 DE 19507344; 17.11.1995 DE 19542827; 22.02.1996 DE 19606424
(43) Veröffentlichungstag der Anmeldung: 04.09.1996
(73) Patentinhaber: CARL ZEISS JENA GmbH, 07745 Jena (DE)
(72) Erfinder: Knoblich, Johannes, D-07747 Jena (DE); Tandler, Hans, D-07745 Jena (DE); Werlich, Reed, D-07745 Jena (DE); Geier, Karl-Heinz, D-07745 Jena (DE); Nordt, Gudrun, D-07747 Jena (DE); Schöppe, Günter, D-07745 Jena (DE)
(74) Vertreter: Geyer, Werner, Dr.-Ing.

(56) Entgegenhaltungen:
- DE-A- 4 319 566
- US-A- 4 654 699
- US-A- 4 695 130
- US-A- 4 827 909
- ISONO H ET AL: "3-D-BILD OHNE FLIMMERN" FUNKSCHAU, Bd. 61, Nr. 13, 16.Juni 1989, Seiten 59-62, XP000031843
- PATENT ABSTRACTS OF JAPAN vol. 12, no. 488 (P-803), 20.Dezember 1988 & JP 63 200115 A (OLYMPUS OPTICAL CO. LTD.)
- WOLF UND FISCHBACH: "Räumliches Sehen im Lichtmikroskop", MIKROKOSMOS, , 1985, Band 74,Nr., Seiten 292-297
- GöKE: "Moderne Methoden der Lichtmikroskopie" , 1988 KOSMOS-VERLAG

## Beschreibung

Die Erfindung betrifft eine Anordnung zur stereoskopischen Betrachtung eines über eine Beleuchtungsoptik beleuchteten Objektes mit Mitteln zur wechselweisen Erzeugung mindestens zweier Beleuchtungsstrahlteilbündel aus einem gemeinsamen Beleuchtungsstrahlbündel, die das Objekt über die Beleuchtungsoptik unter unterschiedlichen Winkeln beleuchten und mit Mitteln zur Zuordnung der entstehenden Bilder des Objektes abwechselnd zum rechten und zum linken Auge des Betrachters.

Eine derartige Anordnung wird in der US-A-4,827,909 beschrieben. Die Lehre in dieser Druckschrift bezieht sich auf Endoskope. Dort wird auch die Verwendung einer rotierenden Schlitzblende angegeben, jedoch ist über deren genaue Anordnung im Strahlengang keine Aussage getroffen. Es ist somit bei der grundsätzlich offenbarten Schlitzblende nur eine Dunkelfeldbeleuchtung möglich. Außerdem sind bei dieser bekannten Anordnung stets Einrichtungen zur Bildaufnahme erforderlich. Eine dreidimensionale Darstellung auf einem Monitor wird erst nach aufwendigen Rechenoperationen durchgeführt. Zudem werden bei der bekannten Anordnung auch zwei Beleuchtungsoptiken für zwei getrennte Strahlengänge eingesetzt.

Weiterhin ist es aus dem Artikel von H. Isono et al., "3-D-Bild ohne Flimmern", Zeitschrift Funkschau, Band 61, No. 13, 16. Juni 1989, München DE, Seiten 59-62, bekannt, zur Darstellung von 3D-Bildern ein System der Zeitmultiplex-Stereoskopie einzusetzen. Dieses bekannte Bildwiedergabesystem setzt zwar für den Zuschauer eine spezielle Brille voraus, liefert dafür aber ein flimmerfreies und weitgehend deutliches räumliches Bild. Die dabei angewandte stereoskopische Darstellungstechnik arbeitet mit einer Halbbild-Abtastung. Diese Druckschrift enthält die Lehre, daß das Flimmern vernachlässigbar klein wird, wenn dem linken und dem rechten Auge jeweils mehr als 55 Bilder pro Sekunde gezeigt werden.

Bekannt ist es weiterhin, zur Erzielung eines stereoskopischen Effektes im Kondensor eines einobjektivigen Mikroskopes Halbblenden in Form von Polarisationsfiltern einzusetzen, deren Polarisationsrichtungen senkrecht aufeinander stehen und in den beiden Tuben entsprechend orientierte Polarisationsfilter vorzusehen (Journal of Microscopy, Vol. 153, Feb. 1989, S. 181 - 186).

In der DE-A1-43 11 603 wird ein Stereomikroskop bei hohen Vergrößerungen an der Auflösungsgrenze beschrieben, bei dem im dingseitigen Strahlengang eines einobjektivigen Lichtmikroskopes in der Objektebene ein Objekttranslator und im abbildungsseitigen Strahlengang ein Strahlengang-Umschalter angeordnet sind. Problematisch ist hierbei der Objekttranslator, dessen Bewegung zu Schwingungen des gesamten Mikroskopes führen kann, besonders bei hohen Objektmassen.

in der US-A-4 561 731 bzw. der DE-A1-31 08 389 sowie in der US-A-4 806 776 wird ein pseudostereoskopischer Effekt mit Hilfe einer sogenannten Differentia-Polarisationsbeleuchtung erzeugt. Für die Beleuchtung sind zwei separate Lichtquellen vorgesehen, deren Polarisatoren zur Erzeugung unterschiedlicher Polarisationsrichtungen nachgeordnet sind.

Ein echtes stereoskopisches Bild soll dagegen gemäß der US-A-4 561 731 oder der DE-A1-31 08 389 (Fig. 10 und dazugehörige Beschreibung) dadurch erzeugt werden, daß im Lichtpfad der Okulare jeweils Polarisatoren sowie zwischen Objektiv und Objekt eine Doppelbrechungsplatte angeordnet sind, wobei der einzige Beleuchtunsstrahlenweg abwechselnd unterschiedlich polarisiert wird.

Eine ähnliche Anordnung ist der WO 94/02872 entnehmbar. Auch hier werden zwei Lichtquellen und zwei Beleuchtungsstrahlengänge eingesetzt.

Dies trifft auch auf das Operationsmikroskop aus dler DD-A5-290 278 zu, wobei zwei diametral einander gegenüberliegende Beleuchtungssysteme geneigt zur optischen Achse vorgesehen sind und das mit dem rechten Okular beobachtete Bild dem ersten Beleuchtungssystem und das mit dem linken Okular beobachtete Bild dem zweiten Beleuchtungssystem zugeordnet wird.

Der Erfindung liegt die Aufgabe zugrunde, eine stereoskopische Beobachtung mikroskopischer Bilder mit hoher Auflösung in normalen Durch- sowie Auflichtmikroskopen, besonders in einkanaligen mikroskopischen Systemen, mit besonders geringem gerätetechnischen Aufwand und Platzbedarf auf der Objektseite zu realisieren.

Diese Aufgabe wird durch eine Anordnung gemäß den Merkmalen des Patentanspruchs 1 gelöst.

Bevorzugte Weiterbildungen der Erfindung sind in den Unteransprüchen beschrieben.

Die erfindungsgemäß eingesetzte Durchführung der Modulation in der Pupillenebene erlaubt ein optimales Ausschöpfen der Beleuchtungsapertur, ohne daß die Beobachtungsapertur unnötig begrenzt wird (S. 5, Z. 1+2). Dadurch wird eine hohe Auflösung erreicht. Auch arbeitet die erfindungsgemäße Anordnung mit nur einer Optik für beide Beleuchtungsstrahlengänge.

Gemäß der Erfindung wird auch eine direkte Beobachtung des dreidimensionalen Bildes ohne Kamera-Monitor-Kombination ermöglicht. Schließlich wird gemäß der Erfindung auch eine Beobachtung des dreidimensionalen Bildes mit einer Kamera-Monitor-Kombination ermöglicht, und zwar in Echtzeit ohne Rechenoperationen.

Die stereoskopische Beobachtung mikroskopischer Bilder mit hoher Auflösung erfolgt, indem etwa in der Aperturblendenebene des Beleuchtungsstrahlenganges oder dem Bild der Eintrittspupille des Objektives ein Lichtmodulator eingesetzt wird, der den Schwerpunkt des Beleuchtungsstrahlenbündels so in zwei Stellungen taktweise verschiebt, daß mit der maximal möglichen Apertur das Objekt mit dem für Stereobetrachtung erforderlichen Winkel beleuchtet wird. Weiterhin sind Mittel zur alternierenden Darstellung der beiden Bilder des stereoskopischen Bildpaares auf einer Bildwiedergabevorrichtung vorgesehen. Die Taktung der Bildwiedergabevorrichtung erfolgt synchron mit der Taktung des Lichtmodulators und die Folgefrequenz ermöglicht einen flimmerfreien Bildeindruck.

Vorteilhaft kann in einer Anordnung als Lichtmodulator eine Flüssigkristallzelle eingesetzt werden.

Vorteilhaft ist der Einsatz einer Flüssigkristallzelle, die den ferroelektrischen Effekt ausnutzt.

Einen anderen vorteilhaften Lichtmodulator stellen zwei dicht übereinander angeordnete Gitter mit einen Teilungsverhältnis 1:1: dar. Die Gestaltung des Gittermusters wird so vorgenommen, daß bei Einsatz in der Aperturblende und Bewegung eines der beiden Gitter gegenüber dem anderen jeweils eine der beiden Aperturblendenhälften wechselweise geöffnet und geschlossen wird, oder bei Einsatz in dem Binokulartubus das Licht wechselweise in den einen oder anderen Ausgang eines Binokulartubus treten kann. Dabei wird die Gitterkonstante so abgestimmt, daß die 1. Beugungsordnung die gewünschte Objektinformation nicht stört.

Die Lichtausbeute dieser Anordnung ist aufgrund der nicht erforderlichen Polarisationsfolien für die Flüssigkristallmodulation höher als die der zuvor beschriebenen Varianten.

Weitere Vorteile und die Wirkungsweise der Erfindung werden nachstehend anhand schematischer Zeichnungen näher erläutert.

Es zeigen:
Fig. 1a: Eine erfindungsgemäße mikroskopische Anordnung mit Durchlichtbeleuchtung
Fig. 1b: Eine erfindungsgemäße mikroskopische Anordnung mit Auflichtbeleuchtung
Fig. 2: Die durch eine erfindungsgemäße Anordnung erzeugten Lichtverhältnisse in der Ebene der Aperturblende des Mikroskopes
Fig. 3.: Die Ausbildung einer Flüssigkristallzelle zur Realisierung der Erfindung
Fig. 4: Die Ausbildung einer weiteren Flüssigkristallzelle mit unterschiedlichen Bereichen für unterschiedliche Objektive
Fig. 5 a,b,c: Eine Anordnung zur Erzeugung der Teilstrahlenbündel der Beleuchtung mit zwei Strichgittern
Fig. 6: Die Zuordnung der Strahlengänge in einem Binokulartubus
Fig.7: Eine im Binokulartubus angeordnete rotierende Scheibe zur Bildtrennung
Fig. 8: Eine weitere Ausführung mit rotierender Scheibe
Fig.9: Eine Ausführung mit rotierender Doppelscheibe
Fig.10: Die Anordnung von LCD - Zellen vor dem Okular
Fig.11: Eine Ausführungsform der Beleuchtung mit zwei Lichtquellen
Fig.12: Eine weitere Ausführungsform der Beleuchtung mit zwei Lichtquellen
Fig. 13 - 15: Weitere vorteilhafte Anordnungen zur Zuordnung der Teilstrahlengänge zu den Betrachteraugen

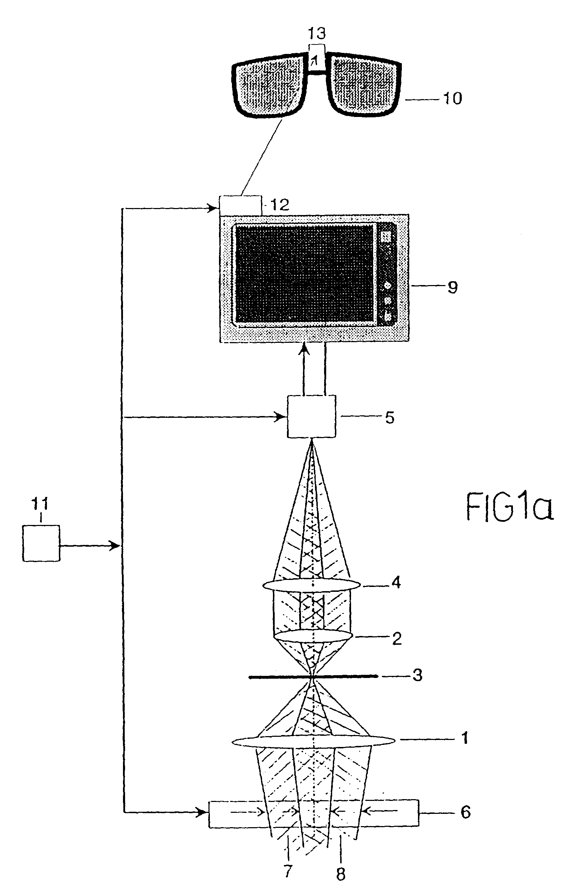

Ein erfindungsgemäße Mikroskop mit Durchlichtbeleuchtung zeigt Fig. 1a. Es setzt sich wie üblich aus einer hier nicht dargestellten Lichtquelle, Kollektor, Kondensor 1 und Objektiv 2 zusammen. Das Objektiv 2 bildet ein Bild des Objektes 3 über die Tubuslinse und Abbildungsoptik 4 auf eine Videokamera 5 ab. Durch den erfindungsgemäßen Lichtmodulator 6 in der Ebene der Aperturblende (oder des Bildes der Eintrittspupille des Objektives) wird der Schwerpunkt des Beleuchtungsstrahlenbündels so in zwei Stellungen taktweise verschoben, daß die Strahlbündel 7 und 8 entstehen und damit das Objekt mit dem für Stereobetrachtung erforderlichen Winkel mit einer möglichst hohen Apertur beleuchtet, ohne daß die Beobachtungsapertur unnötig begrenzt wird.

Ein Taktgenerator 11 steuert den Lichtmodulator 6 und eine Videokamera 5 so, daß jeweils eines der beiden Bilder eines stereoskopischen Bildpaares aufgenommen wird. Die Darstellung der dreidimensionalen Abbildung erfolgt über einen elektronischen Bildschirm 9, der über die Videokamera 5 zur Wiedergabe der beiden Bilder als fernsehtechnische Halbbilder getaktet wird. Die Betrachtung des Bildschirmes erfolgt mit einer Shutterbrille 10. Ein Geber 12 (z.B. eine LED) am Bildschirm sendet gesteuert vom Taktgenerator 11 Lichtsignale, die von einem Sensor 13 an der Shutterbrille empfangen werden. Der Sensor 13 steuert die Umschaltung der Öffnungen der Shutterbrille, so daß jedes Auge im Takt des Lichtmodulators jeweils ein Bild des stereoskopisches Bildpaares sieht, wobei die Folgefrequenz einen flimmerfreien Bildeindruck ermöglicht. Anstelle der Shutterbrille kann der Beobachter auch eine Polarisationsbrille tragen, wenn ein elektronischer Bildschirm verwendet wird, der ein schaltbares Polarisationsfilter besitzt, das mit dem Wechsel der stereoskopischen Halbbilder vom Taktgenerator 11 getriggert wird. Prinzipiell kann auch ohne Videokamera und Monitor dreidimensional beobachtet werden, indem der Beobachter zwar mit einer Shutterbrille ausgerüstet ist, aber durch je ein Okular eines binokolaren Tubusses blickt. Der Taktgenerator muß dann den Lichtmodulator und die Shutterbrille synchron takten.

Weiterhin kann in an sich bekannter Weise vor jedem Auge des Beobachters ein separater Bildschirm angeordnet sein, wobei die Bildschirme mittels des Taktgenerators zur Lichtmodulation synchron getaktet werde.

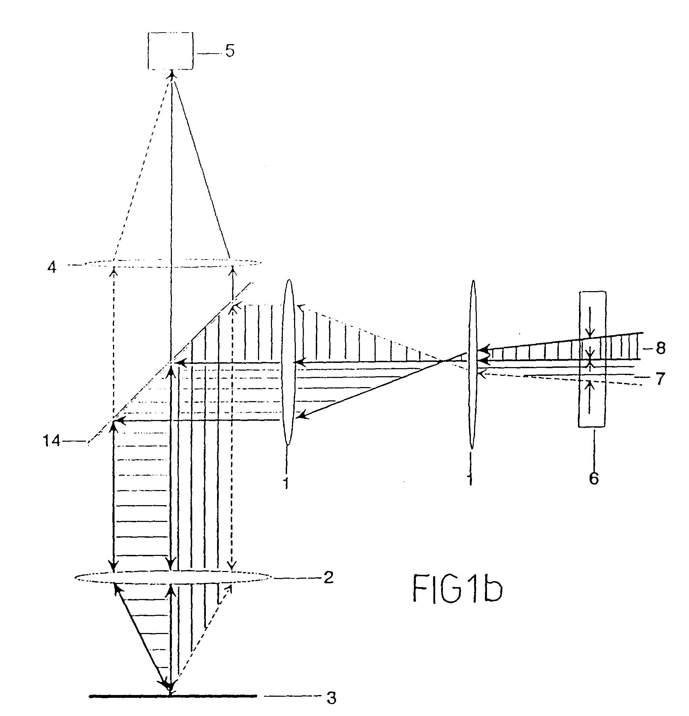

Fig. 1b zeigt eine erfindungsgemäße mikroskopische Anordnung in Auflichtbeleuchtung. Die Beleuchtungsoptiken 1 beleuchten das Objekt 3 über einen Strahlteiler 14, wobei die Strahlbündel 7 und 8 mit dem für die Stereobetrachtung erforderlichen Winkel auf das Objekt gelangen.

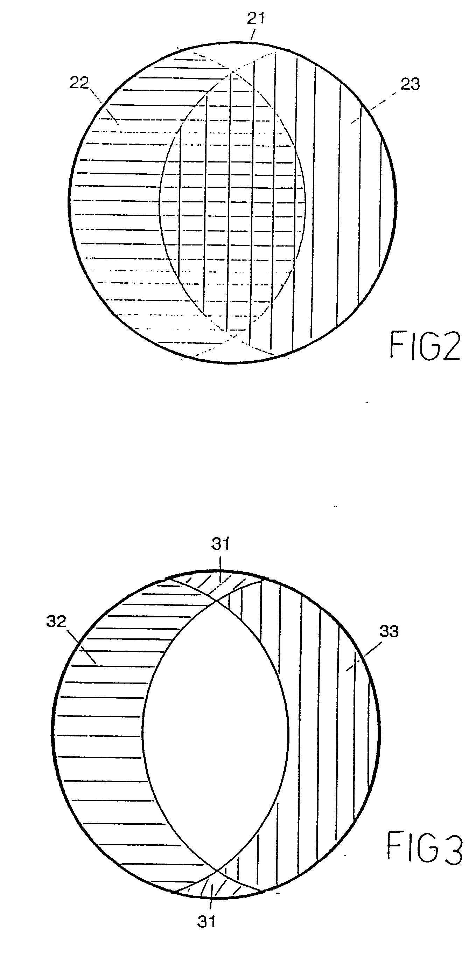

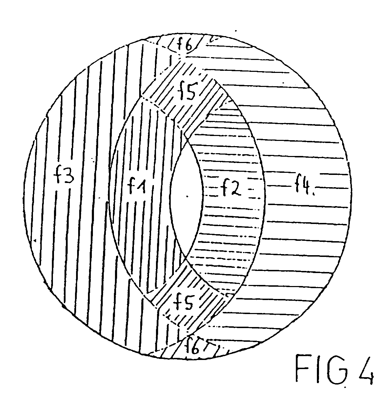

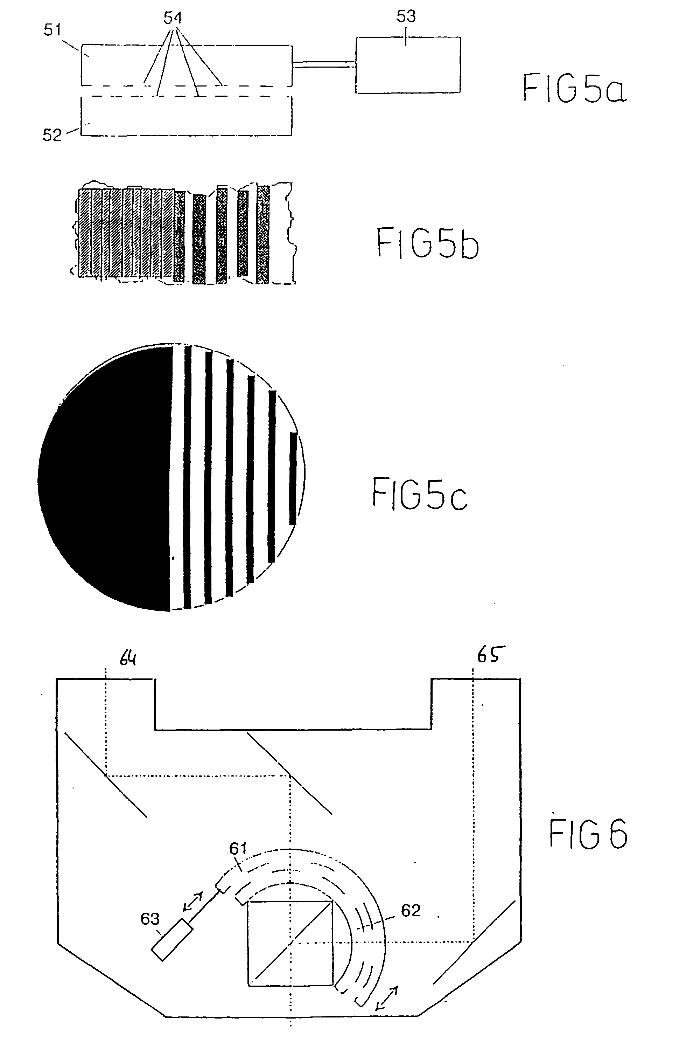

Fig. 2 zeigt die Lichtverhältnisse in der Ebene der Aperturblende (oder dem Bild der Eintrittspupille des Objektives), die der erfindungsgemäße Lichtmodulator erzeugt. 21 stellt die gesamte Eintrittspupille des Objektives dar. In einem Takt wird durch das Beleuchtungsbündel die Fläche 22 und im folgenden Takt die Fläche 23 der Eintrittspupille lichtdurchlässig. Die Schwerpunkte der jeweiligen Bündel sind innerhalb der Beleuchtungsapertur so einstellbar, daß das Objekt mit dem für Stereobetrachtung erforderlichen Winkel beleuchtet wird. Durch die hierdurch möglichen, über Halbblenden hinausgehenden Kreiszweiecke wird dabei jeweils die Beleuchtungsapertur möglichst optimal ausgeschöpft und die Beobachtungsapertur bleibt uneingeschränkt, so daß eine hohe mikroskopische Auflösung erzielt wird.
Fig. 3 zeigt die Elektrodenkonfiguration eines erfindungsgemäßen Lichtmodulators auf der Basis einer Flüssigkristallzelle. Durch eine geeignete Spannung an den transparenten Elektroden 31 und 33 wird das Lichtbündel 22 realisiert, im nächsten Takt wird diese Spannung an die Elektroden 31 und 32 angelegt und damit Lichtbündel 23 realisiert. Der Einsatz von Flüssigkristallzellen erfordert auch die Verwendung eines Polarisators vor und eines Analysators nach der Flüssigkristallzelle, die im Fig. 1 nicht dargestellt sind.
Für Objekte, bei denen die Azimutabhängigkeit des polarisierten Lichtes stören könnte, kann vorteilhaft eine Platte mit dem polarisationsoptischen Gangunterschied λ/4 nach dem Analysator im Beleuchtungsstrahlengang eingesetzt werden.
Um mit Objektiven verschiedener Apertur stereoskopische Betrachtung mit hoher Auflösung zu erzielen, kann die Elektrodenstruktur der Flüssigkristallzelle so modifiziert werden, daß für das jeweilige Objektiv ein optimales Verhältnis zwischen Auflösung und stereoskopischen Effekt erreicht wird. Fig. 4 zeigt eine Ausführungsform für zwei Objektive mit um den Faktor 2 verschiedenen Abbildungsmaßstäben, wobei einem ersten, stärkeren Objektiv die Flächen f3 und f4 für rechts und links sowie stets f6, einem schwächeren Objektiv die Flächen f1+f3 und f2+f4 für rechts und links sowie stets f5+f6 zugeordnet sind.
Vorteilhaft ist hierbei die Verwendung eines Objektivrevolvers mit Codierung, so daß beim Umschalten des Objektives auch die entsprechende Elektrodenkonfiguration des Lichtmodulators ausgewählt wird.
Um ein flimmerfreies Bild zu erzielen, ist der Einsatz von ferroelektrischen Flüssigkristall-Schaltern und die Darbietung der beiden Bilder auf dem Monitor als Halbbilder (z.B. Bild links: 2n. Zeilen; Bild rechts: (2n-1). Zeilen) vorteilhaft. Eine relativ einfache Möglichkeit zur Modulation der Eintrittspupille bietet die Anwendung eines Modulators 6 aus zwei Strichgittern, die dicht übereinander angeordnet und im Verhältnis 1:1 geteilt sind.
Im Fig. 5 ist diese Anordnung schematisch dargestellt.
Die Gitterstriche 54 des Gitters 51 und des Gegengitters 52 werden in von oben nach unten gehend orientiert und eines der beiden Gitter, hier 51, mit einem Aktor 53 um 1/2 Gitterkonstante nach rechts und links gegenüber dem anderen bewegt. Dabei wird der Antrieb zweckmäßigerweise so gestaltet, daß gegeneinander gerichtete Beschleunigungskräfte auftreten, um Erschütterungen und damit ein "Verschmieren" des Stereoeffektes zu vermeiden.

Bei einem der beiden Gitter sind im einfachsten Fall die Gitterstriche 54 in einer Pupillenhälfte um 1/2 Gitterkonstante gegenüber der anderen versetzt . Durch die Gitterbewegung wird damit wechselweise eine der beiden Pupillenhälften, wie in Fig. 5b bzw. 5c dargestellt, abgedeckt, während die andere transparent ist.
Es sind auch Muster entsprechend Fig. 3 möglich. Die Darstellung des Bildes erfolgt in der selben Weise, wie bei den vorgenannten Varianten.

Dieses Prinzip läßt sich auch modifiziert in binokularen Tuben zur direkten stereoskopischen Beobachtung anwenden. Eine derartige prinzipielle Anordnung ist in Fig. 6 dargestellt.
Dabei muß die Gitterkonstante des Gitters 61 und Gegengitters 62 so gewählt werden, daß die von diesen Gittern erzeugten Beugungsbilder sich nicht störend dem gewünschten Bild überlagern.
Eine für praktische Anwendung brauchbare Dimensionierung ist eine Gitterkonstante von ca. 3 µm bei Sehfelddurchmessern von ca. 23 mm und optischen Tubuslängen um 160 mm.
Der Aktor 63 bewegt das Gitter um 1/2 Gitterkonstante. Dabei werden die Tubusöffnungen 64,65 ganzflächig überdeckt und wechelweise synchron zur Modulation der Eintrittspupille freigegeben. Ein Ausführungsbeispiel ist in Fig. 6 dargestellt.

Die Erfindung ist nicht nur an die dargestellten Ausführungsformen gebunden. Insbesondere kann zur Erzeugung der versetzten Teilstrahlenbündel mindestens eine in der Ebene der Aperturblende angeordnete rotierende Blende vorgesehen sein, wobei eine zu der Drehfrequenz synchrone Zuordnung von Teilstrahlenbündeln der Beleuchtung zu den Augen des Beobachters mit den oben dargestellten Mitteln erfolgt.

Bei der Betrachtung von Objekten, bei denen eine Veränderung der Beleuchtungs- und Betrachtungsebene sinnvoll und vorteilhaft ist, wie zum Beispiel bei Operationsfeldern mittels eines Operationsmikroskopes oder bei Kolposkopen, können Mittel zur Drehung der die Teilstahlenbündel freigebenden Öffnungen und der Kamera um die optische Achse vorgesehen sein, wobei, beispielsweise am betrachteten Videobild, die Orientierung des betrachteten Bildes entsprechend angepaßt wird.

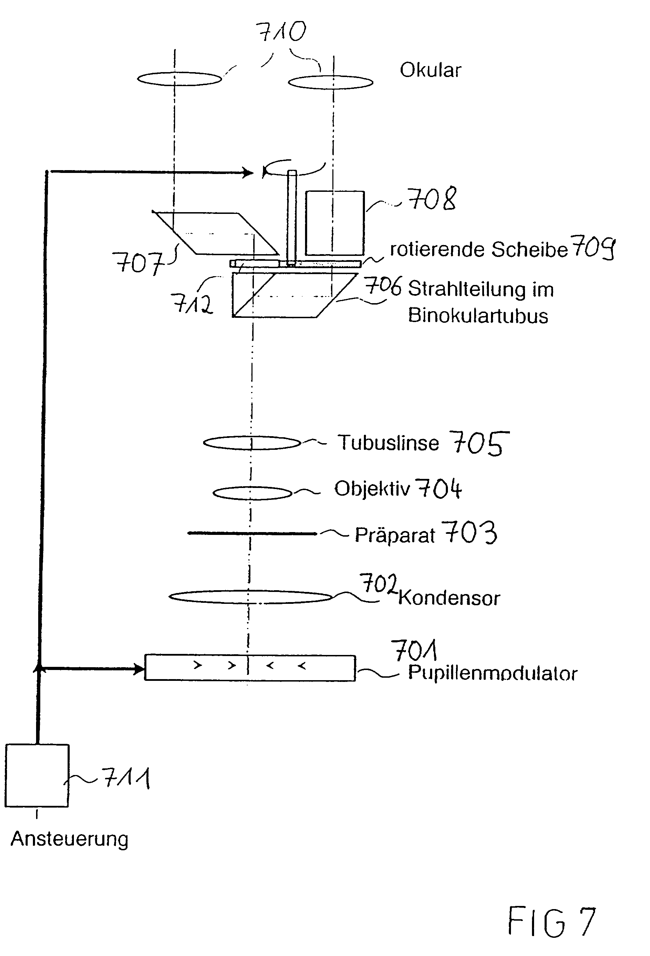

Um die Lichtverluste durch die Polarisator-Analysator-Kombination einer LCD-Zelle als Betrachtungsshutter zu reduzieren, können rotierende Scheiben als Shutter im binokularen Tubus eingesetzt werden.
Dabei sind verschiedene vorteilhafte Varianten möglich. So kann der Beleuchtungsshutter eine rotierende Scheibe mit abwechselnden transparenten und lichtundurchlässigen Bereichen sein.
Eine derartige Anordnung ist in Fig.7 dargestellt.
Einem erfindungsgemäßen und beispielsweise in Fig. 1-3 beschriebenen Pupillenmodulator 701 ist ein Kondensor 702 und ein Objekt 703 im Durchlichtstrahlengang einer hier nicht dargestellten Lichtquelle nachgeordnet.

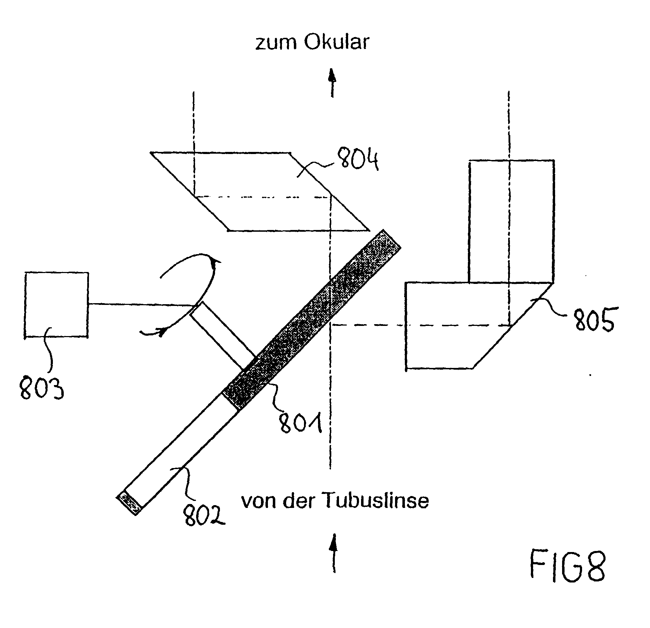

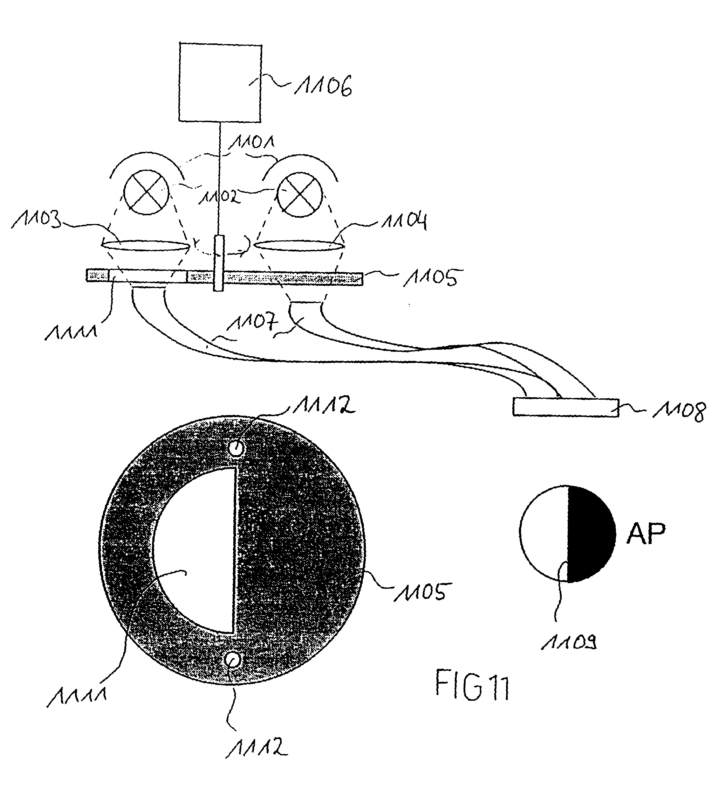

Das abwechselnd aus verschiedenen Richtungen durchstrahlte Objekt 703 wird über ein Objektiv 704 sowie eine Tubuslinse 705 in Richtung eines nicht dargerstellten Binokulartubus eines Mikroskopes abgebildet.
Dieser enthält einen Strahlteiler 706, dem eine rotierende Scheibe 709 nachgeordnet ist, die eine Lichtdurchlaßöffnung 712 aufweist, ansonsten aber lichtundurchlässig ausgebildet ist.
Einem Umlenkprisma 707 bzw. einem Ausgleichsglas 708 sind die Okulare 710 des Mikroskopes nachgeordnet.
Eine Ansteuer - und Synchronisationseinheit 711 bewirkt die Synchronisation der Strahlengangumschaltung im Pupillenmodulator 701 mit der Rotation der Scheibe 709, so daß mittels der Lichtdurchlaßöffnung, die jeweils nur ein Okular freigibt, die unterschiedlichen Beleuchtungsrichtungen dem Auge seitenrichtig dargeboten werden.
Eine Scheibe mit transparenten und spiegelnden Bereichen zur Zuordnung der Teilstrahlen zu den Okularen zeigt Fig.8 Die Scheibe kann diese Bereiche in verschiedenen Konfigurationen tragen.
Weiterhin können zur Synchronisation in den Anordnungen gemäß Fig.7,8,9,12 analog Fig.11 Kennmarken vorhanden sein, über die durch eine Photodioden-Photoempfänger-Kombination das Triggersignal für die synchrone Schaltung der Betrachtungsshutter gewonnen wird.
Eine mit einer Ansteuer - und Synchronisationseinheit 803 verbundene , im von einer hier nicht dargestellten Tubuslinse kommenden Strahlengang schräg angeordnete rotierende Scheibe 801 ist auf ihrer einer Lichtdurchlaßöffnung 802 zur Drehachse gesehen gegenüberliegenden Seite reflektierend ausgebildet, so daß bei ihrer Rotation das Licht abwechselnd zwei Umlenkprismen 804,805 und im Weiteren den hier nicht dargestellten Okularen zugeordnet wird .

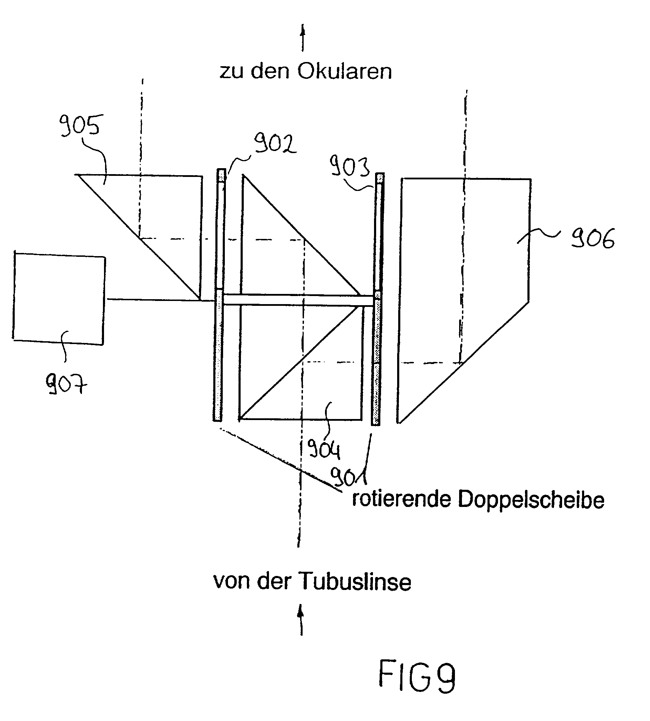

In Fig. 9 ist eine rotierende Doppelscheibe 901 mit parallelen, einander gegenüberliegenden transparenten und lichtundurchlässigen Bereichen 902, 903 , die mit einer Ansteuer - und Synchronisationseinheit 907 verbunden ist, vorgesehen.
Über einen Strahlteiler 904 gelangt bei der dargestellten Stellung der Doppelscheibe 901 das von der nicht dargestellten Tubuslinse kommende Licht auf ein erstes Strahlumlenkprisma 905, sowie bei einer um 180 Grad versetzten Stellung der Doppelscheibe auf ein zweites Strahlumlenkprisma 906 und wird auf diese Weise abwechselnd und mit dem Wechsel der Beleuchtung synchronisiert den Okularen zugeordnet.

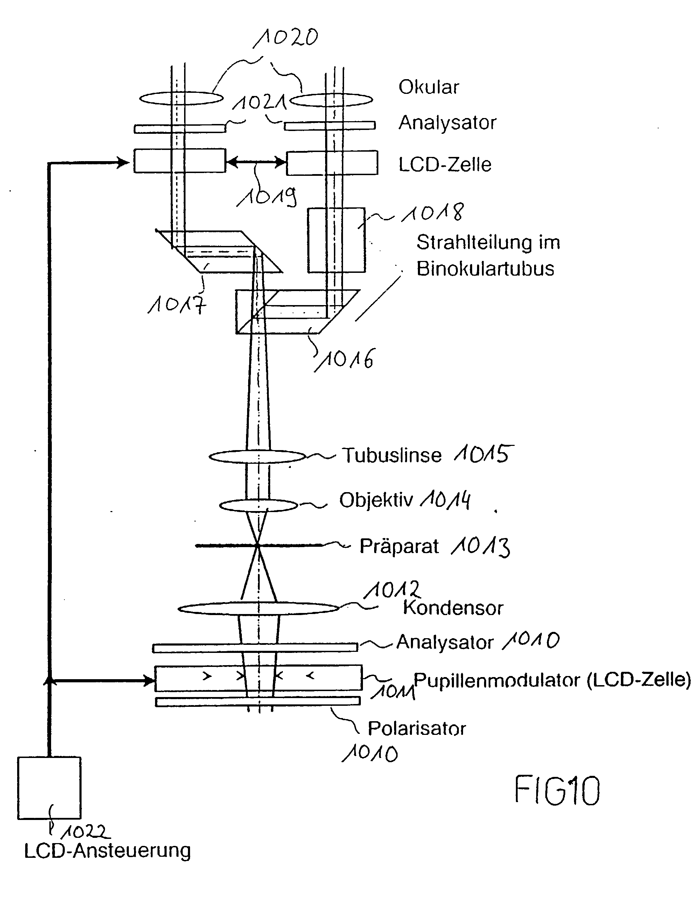

Als Beobachtungsshutter kann weiterhin, wie in Fig.10 dargestellt, für jedes Auge eine LCD-Zelle im binokularen Tubus eingesetzt werden.
Ist der Beleuchtungsshutter ebenfalls eine LCD-Zelle, so erfordert jede LCD-Zelle eine Polarisator-Analysator-Kombination. Diese vier Polare für jeden Strahlengang ergeben aber relativ hohe Lichtverluste. Haben die optischen Elemente zwischen Beleuchtungsshutter und Betrachtungsshutter günstige polarisationsoptische Eigenschaften, d.h. sind die Wirkungen der Optik auf linear polarisiertes Licht im Strahlengang für linkes und rechtes Auge etwa gleich, weil geringe Phasensprünge auftreten und die verwendete Optik weitgehend spannungsfrei ist, so kann der Analysator des Beleuchtungsshutter zugleich als Polarisator für die Betrachtungsshutter wirken und damit ein Polar entfallen.
In Fig.10 sind im Einzelnen dargestellt:
Eine Polarisator/ Analysatoranordnung 1010, in der im Lichtweg als erfindungsgemäßer Pupillenmodulator eine LCD - Zelle 1011 angeordnet ist , der ein Kondensor 1012 sowie das Objekt 1013 nachgeordnet ist.
Wie bereits mehrfach beschrieben, ist dem Objekt ein Objektiv 1014 sowie eine Tubuslinse 1015 nachgeordnet.
Ein im nicht dargestellten Binokulartubus eines Mikroskopes angeordneter Strahlteiler 1016 sowie ein Umlenkprisma 1017 und ein Ausgleichsglas1018 erzeugen die Strahlengänge in den Okularen 1020.

Den Okularen 1020 sind eine den rechten und linken Strahlengang abwechselnd freigebende LCD - Zelle 1019 sowie Analysatoren 1021 nachgeordnet.

Über eine Ansteuer - und Synchronisationseinheit 1022 erfolgt die synchronisierte Ansteuerung der Freigabe der Strahlengänge in der LCD - Zelle 1011 sowie der LCD - Zelle und damit die Zuordnung der unterschiedlichen Beleuchtungswinkel zu den Augen des Betrachters.

Um die Lichtverluste durch die Polarisator-Analysator-Kombination einer LCD-Zelle als Beleuchtungsshutter zu reduzieren , können in einer weiteren Ausführungsform der Erfindung, die in Fig . 11 dargestellt ist, zwei Lichtquellen eingesetzt werden, deren Licht erfindungsgemäß in die Ebene der Eintrittspupille des Objektives oder eine zu dieser konjugierten Ebene abgebildet werden.
Hierzu wird nahezu das gesamte Licht jeder Lichtquelle auf den kreisförmigen Eintritt eines Lichtleitfaserbündels abgebildet. Jedes Lichtleitfaserbündel ist als Querschnittswandler ausgebildet, so daß jede Lichtsaustrittsfläche halbkreisförmig ist. Die Austrittsflächen werden zu einem Vollkreis zusammengesetzt und bilden die Ebene der Eintrittspupille (Aperturblendenebene) bzw. eine konjugierte Ebene. Vor dem Lichteintritt in das Lichtleitfaserbündel wird jeder Lichtstrahl durch einen rotierenden Shutter geschaltet, der z.B. als Halbkreissektor ausgebildet sein kann. Zugleich trägt der rotierende Shutter Kennmarken, über die durch eine Photodioden-Photoempfänger-Kombination das Triggersignal für die synchrone Schaltung der Betrachtungsshutter gewonnen wird. Da der rotierende Shutter der Kaltlichtquelle zugeordnet werden kann, erfolgt eine mechanische Trennung vom Mikroskopstativ, so daß keine eventuellen mechanischen Schwingungen des Rotors auf das Mikroskopstativ wirken.

In Fig. 11 sind im einzelnen mit Reflektoren 1101 versehene Lichtquellen 1102 vorgesehen, die über Abbildungsoptiken 1103, 1104 eine rotierende Scheibe 1105, die wie schon beschrieben und in der untenstehenden Draufsicht erkennbar, eine halbkreisförmige Lichtdurchtrittsöffnung 1111 aufweist und im übrigen lichtundurchlässig ausgebildet ist und dadurch das Licht abwechselnd auf die Lichteintrittsflächen zweier Lichtleiterbündel 1107 fallen läßt.
Die gemäß der Darstellung der Aperturblendenebene 1108 jeweils halbkreisförmig ausgebildeten Lichtleiteraustrittsbündel erzeugen das dargestellte, abwechelnd rechts und links helle oder dunkle Bild 1109 in der Ebene der Aperturblende.
Gleichzeitig trägt die Scheibe 1105 Meßmarken 1112, die als kleine Öffnungen ausgebildet sind und hierdurch mittels einer nicht dargestellten Photodioden - Photoempfängerkombination ein Synchronisationssignal für eine Ansteuer - und Synchronisationseinheit 1106 erzeugen.

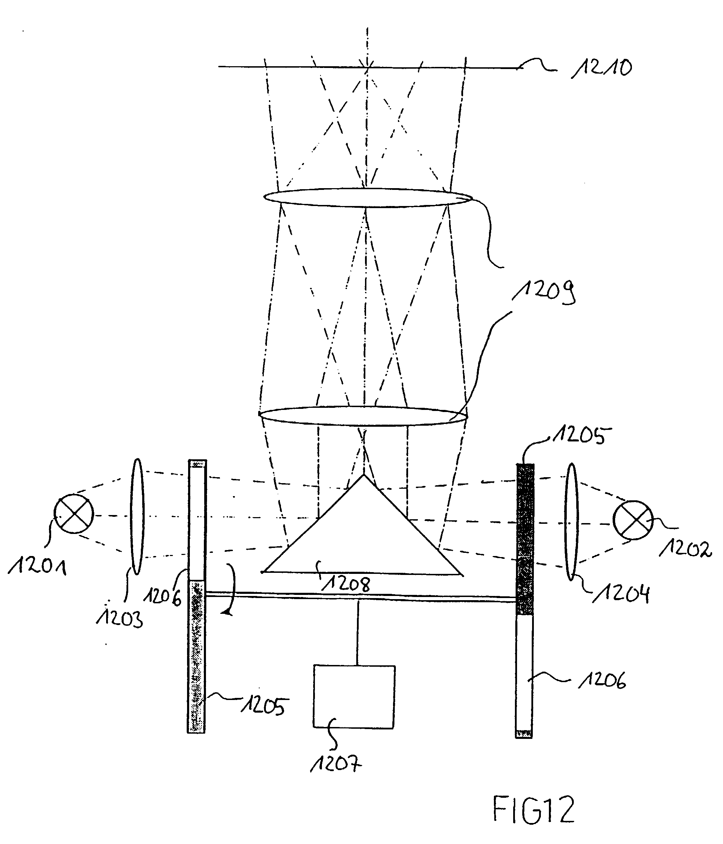

Um die Lichtverluste durch die Polarisator-Analysator-Kombination einer LCD-Zelle als Beleuchtungsshutter zu reduzieren, können wie in Fig.12 dargestellt, vorteilhaft zwei Lichtquellen über je eine Linse auf die Katheten eines verspiegelten Prismas abgebildet werden.
Die Spitze des Prismas ist entweder die Ebene der Eintrittspupille (Aperturblendenebene) oder über eine zusätzliche Linsenkombination erfolgt die Abbildung in die Eintrittspupille des Mikroskopes. Eine rotierende Doppelscheibe als Shutter bildet den Beleuchtungsshutter. Die rotierende Doppelscheibe trägt außerdem Kennmarken, über die durch eine Photodioden-Photoempfänger-Kombination das Triggersignal für die synchrone Schaltung der Betrachtungsshutter gewonnen wird.
In Fig.12 sind im einzelnen Lichtquellen 1201,1202 Abbildungsoptiken 1203, 1204 nachgeordnet. Eine rotierende Doppelblende 1205 weist um 180 Grad versetzte Lichtdurchtrittsöffnungen 1206 auf und ist ansonsten Lichtundurchlässig, so daß jeweils nur das Licht einer Lichtquelle auf die verspiegelte Seitenfläche eines Prismas 1208 gelangt, von dieser reflektiert wird und über eine Beleuchtungsoptik 1209 in eine Objektebene 1210 gelangt, wodurch das Objekt unter verschiedenen Winkeln nacheinander beleuchtet wird.
Eine Ansteuer - und Synchronisationseinheit synchronisiert die Bewegung der Doppelscheibe 1205 mit geeigneten, in den vorigen Figuren beschriebenen Mitteln zur Bildtrennung in der Beobachtungsebene.

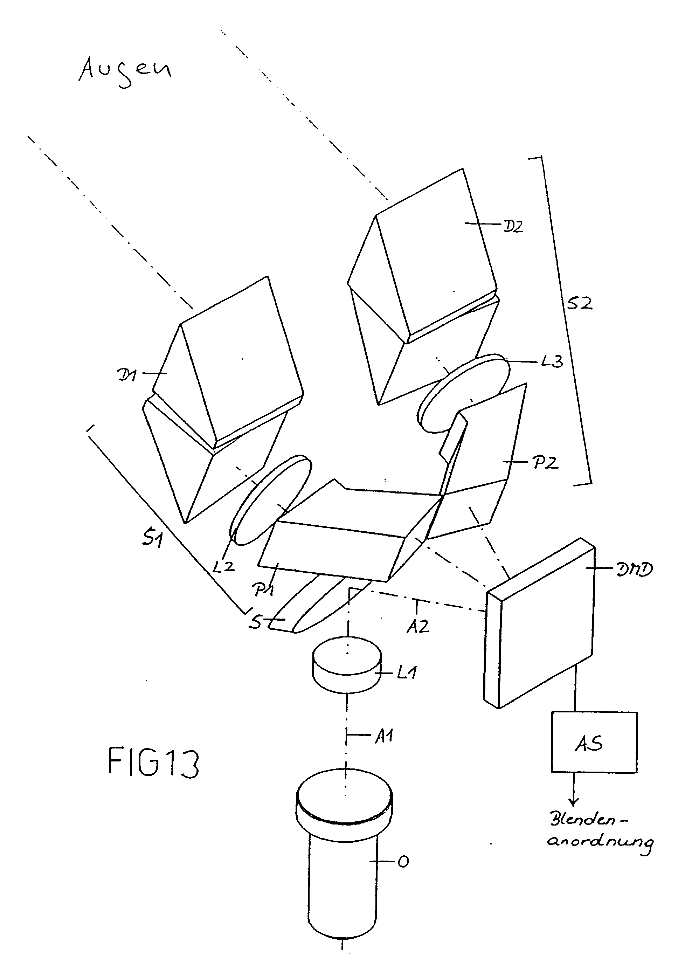

In Fig 13 ist einem Objektiv O, das von zwei durch abwechselnde Beleuchtung des Objektes erzeugten Stereo-Strahlengängen durchsetzt wird, die , beispielsweise, wie oben erläutert, durch alternierende Freigabe von Blenden in der Ebene der Eintrittspupille des Objektives eines Durchlichtmikroskopes erzeugt werden, eine Tubuslinse L1 und ein Spiegel S nachgeordnet.
Es sind sogenannte " digital micromirror - devices " (DMD) bekannt, die aus einer Vielzahl von Mikrospiegeln bestehen , deren Winkellage elektrostatisch verändert wir0,d.
Zum Aufbau und zur Wirkungsweise derartiger Anordnungen wird auf Veröffentlichungen in EP 664470 A2, EP 656554 A2, EP 601309 A1, US 5382961, US 5444566, und US 5285196 verwiesen.
Derartige Anordnungen können unerwartet vorteilhaft auch für die Erzeugung von stereoskopischen Bildern im Mikroskop eingesetzt werden.

Dazu wird der DMD-Chip entweder nicht orthogonal oder orthogonal (senkrecht) in ein Zwischenbild gelegt, das in seiner Größe über die Brennweite der Tubuslinse dimensioniert wird, oder in den parallelen Strahlengang zwischen Objektiv und Tubuslinse gebracht .
Das Zwischenbild auf dem DMD-Chips wird über eine geeignete Optik in das Okularzwischenbild abgebildet bzw. im parallelen Strahlengang wird das Okularzwischenbild durch eine geeignete Optik nach dem DMD-Chip erzeugt. Zwischen beiden Bildern werden Prismen- bzw. Spiegelumlenkungen vorgesehen, die für ein aufrechtes, seitenrichtiges Bild in der vom jeweiligen Nutzer benötigten Pupillendistanz sorgen.

Pupillensteuerung und DMD-Schaltung sind synchron getaktet, so daß dem linken und rechten Auge des Betrachters jeweils ein Bild des stereoskopischen Bildpaares angeboten werden.

Die im Folgenden beschriebenen Varianten sind für Auf- und Durchlicht -Mikroskopstative ebenso geeignet wie für Inversmikroskope und zum Einsatz in der Endoskopie.

Auf einer Digital Mirror Device - Anordnung (DMD) entsteht ein Zwischenbild des betrachteten Objektes, das durch elektrostatische Ansteuerung der Mikrospiegel abwechselnd in ein linkes und rechtes optisches System S1 bzw. S2 eingespiegelt wird, das jeweils aus einem prismatischen Körper P1 bzw. P2 , Linsen L2 bzw. L3 sowie auf die Betrachteraugen umlenkenden Doppelprismen D1 oder D2 besteht.
Der DMD - Chip liegt hierbei in einem Winkel ungleich 90 Grad sowohl zur Objektivachse A1 als auch zur vom Element S durch Umlenkung erzeugten Achse A2 .
Mittels einer Ansteuereiheit AS wird sowohl die DMD- Anordnung als auch die nicht dargestellte Blendenanordnung in der Eintrittspupille des Objektives synchron mit einer Frequenz oberhalb der Flimmerfrequenz des Auges angesteuert.

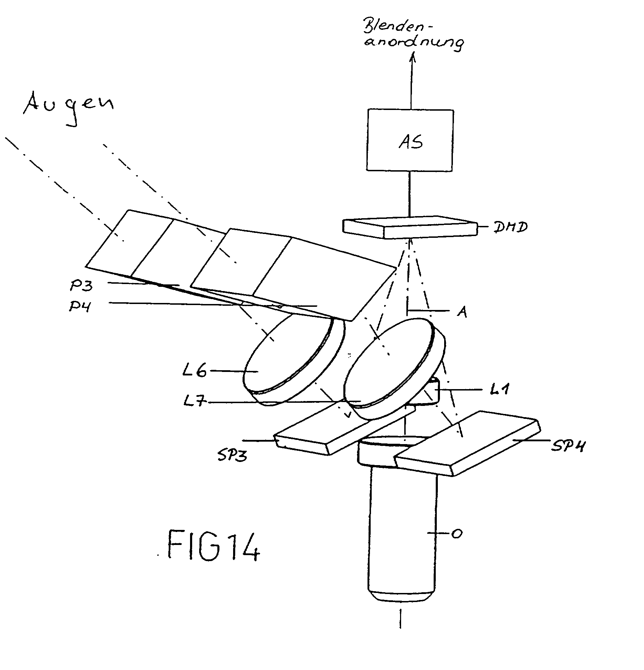

Im Fig. 14 ist das DMD- Element senkrecht zur Objektivachse A im Zwischenbild der Tubuslinse L1 angeordnet und lenkt wechelweise den Strahlengang auf symmetrisch zur Achse A angeordneten Umlenkspiegel Sp3, Sp4, denen Linsen L6, L7 sowie Prismen P3, P4 zur Umlenkung in Richtung des Okulars sowie zur Erzeugung des Okularzwischenbildes nachgeordnet sind.
Zwischen Tubuslinse L1 und der DMD - Anordnung kann auch ein hier nicht dargestelltes weiteres Umlenkelement vorgesehen sein.
Auch hier ist eine wie in Fig. 7 wirkende Ansteuereinheit AS vorgesehen.

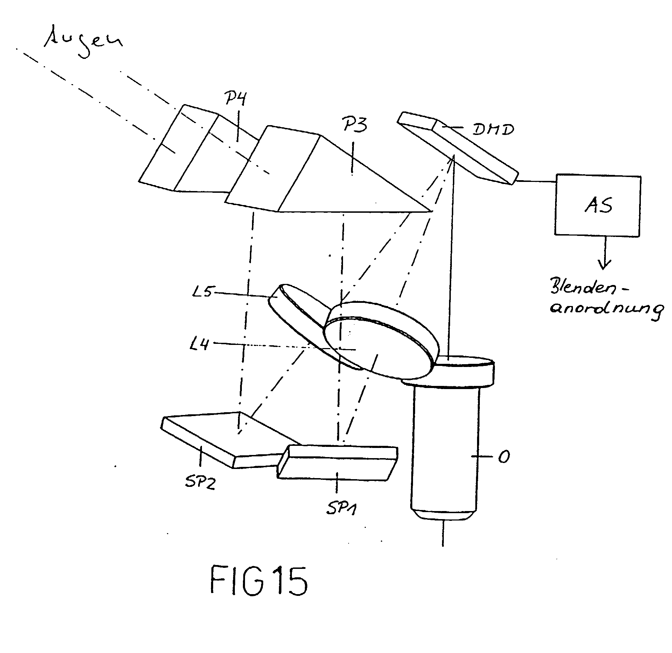

In Fig.15 ist das DMD- Element direkt dem Objektiv O im parallelen Strahlengang nachgeordnet und erzeugt wechselweise einen Strahlengang durch Tubuslinsen L4, L5 , denen Umlenkspiegel Sp1 und Sp2 sowie Prismen P3, P4 nachgeordnet sind.
Das Okularzwischenbild entsteht nach den Prismen P3, P4 und wird mittels einer nicht dargestellten Okularoptik betrachtet.

Wiederum ist eine Ansteuereinheit AS vorgesehen.

Mittels der DMD - Anordnung können ausreichende Schwenkwinkel realisiert werden, um die hier benötigte Winkeldifferenz zu erzeugen.

Vorteilhaft kann eine zu Fig. 13 - 15 analoge Anordnung auch unter Verwendung eines Galvanometerspiegels eingesetzt werden, der anstelle der DMD - Anordnung den gesamten Strahlengang ablenkt.

Mit dem Wegschalten des ersten Umlenkspiegels S in Fig.13 bzw. des DMD-Chips in Fig. 14 und Fig.15 ist der ungehinderte Strahlengang zu einer TV-Kamera und einer alternativen Monitorbetrachtung möglich, die eine Stereobeobachtung bei Synchronisation von Pupillen-beleuchtung, Kamera und Bildwiedergabe ermöglicht.

## Patentansprüche

1. Anordnung zur stereoskopischen Betrachtung eines über eine Beleuchtungsoptik (1209) beleuchteten Objektes (3, 703, 1013, 1210) mit Mitteln zur wechselweisen Erzeugung mindestens zweier Beleuchtungsstrahlteilbündel (7 und 8) aus einem gemeinsamen Beleuchtungsstrahlbündel, die das Objekt (3, 703, 1013, 1210) über die Beleuchtungsoptik (1209) unter unterschiedlichen Winkeln beleuchten, und mit Mitteln zur Zuordnung der entstehenden Bilder des Objektes (3, 703, 1013, 1210) abwechselnd zum rechten und zum linken Auge des Betrachters, dadurch gekennzeichnet, daß in einer mikroskopischen Anordnung aus Lichtquelle, Beleuchtungsoptik (1, 1209) und mindestens einem das Objekt (3, 703, 1013, 1210) abbildenden Objektiv (2, 704, 1014) die Mittel zur wechselweisen Erzeugung der Beleuchtungsstrahlteilbündel (7 und 8) etwa in der Ebene der Aperturblende des Mikroskopes oder einer zu dieser optisch konjugierten Ebene angeordnet sind, und daß eine Steuereinrichtung zur Zuordnung der Bilder mit einer Frequenz oberhalb der Flimmerfrequenz des menschlichen Auges vorhanden ist.

2. Anordnung nach Anspruch 1, dadurch gekennzeichnet, daß die Teilbündel (7 und 8) einen Winkel zueinander einschließen, der in etwa dem Stereo-Sehwinkel des Betrachters entspricht.

3. Anordnung nach Anspruch 1 oder 2, dadurch gekennzeichnet, daß die Mittel zur wechselweisen Erzeugung der Beleuchtungsstrahlteilbündel (7 und 8) etwa in der Ebene der Eintrittspupille (21) des Objektivs (2, 704, 1014) angeordnet sind.

4. Anordnung nach einem der Ansprüche 1 bis 3, dadurch gekennzeichnet, daß über die Lichtquelle und die Beleuchtungsoptik (1, 1209) eine Durchlichtbeleuchtung in Richtung des abbildenden Objektivs (2, 704, 1014) eines Mikroskopes vorhanden ist.

5. Anordnung nach einem der Ansprüche 1 bis 3, dadurch gekennzeichnet, daß durch die Beleuchtungsoptik (1, 1209) eine Auflichtbeleuchtung des Objektes (3, 703, 1013, 1210) vorhanden ist, deren Beleuchtungsbündel über einen teildurchlässigen Spiegel (14) in den Beobachtungsstrahlengang eines Mikroskopes eingeblendet ist.

6. Anordnung nach einem der Ansprüche 1 bis 5, gekennzeichnet durch Beleuchtungsteilbündel (22 und 23) mit einem jeweils über die Hälfte der optisch wirksamen Beleuchtungsfläche hinausgehenden Querschnitt.

7. Anordnung nach einem der Ansprüche 1 bis 6, dadurch gekennzeichnet, daß zur wechselweisen Erzeugung der Beleuchtungsstrahlteilbündel (7 und 8) mindestens eine Flüssigkristallzelle (1011) vorhanden ist, die elektrisch ansteuerbare Teilbereiche aufweist, die wechselweise lichtdurchlässig geschaltet werden.

8. Anordnung nach Anspruch 7, dadurch gekennzeichnet, daß zur Anpassung an unterschiedliche Abbildungsobjektive unterschiedliche Abbildungsobjektive unterschiedliche elektrisch ansteuerbare Teilbereiche der Flüssigkristallzelle (1011) vorhanden sind.

9. Anordnung nach einem der Ansprüche 7 oder 8, dadurch gekennzeichnet, daß im Strahlengang der Flüssigkristallzelle (1011) nachgeordnet eine Platte mit einem polarisationsoptischen Gangunterschied λ/4 angeordnet ist.

10. Anordnung nach einen der Ansprüche 1 bis 6, dadurch gekennzeichnet, daß zur wechselweisen Erzeugung der Teilbündel (7 und 8) des Beleuchtungsstrahlenbündels im Beleuchtungsstrahlengang nacheinander mindestens zwei zueinander verschiebliche Strichgitter (51, 52; 61, 62) angeordnet sind, deren Gitterstriche (54) so zueinander versetzt sind, daß bei einer Verschiebung wechselweise unterschiedliche Teilbereiche der Gitteranordnung lichtdurchlässig sind.

11. Anordnung nach Anspruch 10, dadurch gekennzeichnet, daß auf mindestens einem ersten Strichgitter (51, 61) die Gitterstriche (54) eines Teilbereiches um eine halbe Gitterkonstante gegen die Gitterstriche eines zweiten Teilbereiches eines zweiten Strichgitters (52, 62) versetzt sind und eine Verschiebung des ersten gegen ein zweites Strichgitter um jeweils eine halbe Gitterkonstante vorhanden ist.

12. Anordnung nach einem der Ansprüche 1 bis 11, dadurch gekennzeichnet, daß eine Übertragungsoptik zur Erzeugung des Bildes einer Lichtquellenanordnung in der Ebene der Aperturblende oder einer zu dieser optisch konjugierten Ebene vorhanden ist.

13. Anordnung nach einem der Ansprüche 1 bis 12, dadurch gekennzeichnet, daß zur Zuordnung der entstehenden Bilder des Objektes (3, 703, 1013, 1210) abwechselnd zum rechten und zum linken Auge des Betrachters eine das Objekt aufnehmende Videokamera (5) vorhanden ist, der mindestens ein Bildschirm (9) nachgeordnet ist, auf dem im Takt der wechselweisen Beleuchtung die Bilder des Objektes entstehen.

14. Anordnung nach Anspruch 13, gekennzeichnet durch die Anordnung der Videokamera (5) im Strahlengang des Mikroskopes nach dem Abbildungsobjektiv (2).

15. Anordnung nach einem der Ansprüche 1 bis 14, dadurch gekennzeichnet, daß zur Betrachtung eines Bildschirmes (9) für den Betrachter eine Brille (10) vorhanden ist, die im Takt der wechselweisen Beleuchtung des Objektes (3) jeweils einem Auge ein Bild zuordnet.

16. Anordnung nach Anspruch 15, dadurch gekennzeichnet, daß die Brille (10) eine Shutterbrille mit umschaltbaren Öffnungen für ein rechtes und ein linkes Auge ist.

17. Anordnung nach Anspruch 15, dadurch gekennzeichnet, daß die Brille (10) eine Polarisationsbrille ist und vor dem Bildschirm (9) mindestens ein im Takt der wechselweisen Beleuchtung schaltbares Polarisationsfilter angeordnet ist.

18. Anordnung nach einem der Ansprüche 13 bis 17, dadurch gekennzeichnet, daß vor jedem Auge ein separater Bildschirm vorhanden ist und daß den Bildschirmen im Takt der wechselweisen Beleuchtung die Bilder des Objektes zugeordnet sind.

19. Anordnung nach einem der Ansprüche 1 bis 18, dadurch gekennzeichnet, daß zur Zuordnung der entstehenden Bilder des Objektes (1013) abwechselnd zum rechten und zum linken Auge des Betrachters im Binokulartubus eines Mikroskopes den Tubusöffnungen im Takt der wechselweisen Beleuchtung jeweils ein Bild des Objektes (1013) zugeordnet ist.

20. Anordnung nach Anspruch 19, dadurch gekennzeichnet, daß dem Binokulartubus eine Shutterbrille (10) zugeordnet ist.

21. Anordnung nach Anspruch 19, dadurch gekennzeichnet, daß im Binokulartubus mindestens zwei zueinander verschiebliche Strichgitter (51, 52; 61, 62) angeordnet sind, deren Gitterstriche (54) so zueinander versetzt sind, daß bei einer Verschiebung wechselweise unterschiedliche Teilbereiche der Gitteranordnung lichtdurchlässig sind, die jeweils eine Tubusöffnung freigeben.

22. Anordnung nach Anspruch 21, dadurch gekennzeichnet, daß im Binokulartubus ein Strahlteiler (1016) zur Aufspaltung in Strahlengänge für ein rechtes und ein linkes Auge vorhanden ist, dem die Strichgitter nachgeordnet sind.

23. Anordnung nach Anspruch 21 oder 22, dadurch gekennzeichnet, daß auf mindestens einem ersten Strichgitter (51; 61) die Gitterstriche eines Teilbereiches um eine halbe Gitterkonstante gegen die Gitterstriche eines zweiten Teilbereiches versetzt sind und eine Verschiebung des ersten gegen ein zweites Strichgitter (52, 62) um jeweils eine halbe Gitterkonstante erfolgt.

24. Anordnung nach einem der Ansprüche 1 bis 19, dadurch gekennzeichnet, daß die durch die Teilbündel (1107) des Beleuchtungsstrahlbündels aufgespannte Ebene (1105) um die optische Achse drehbar ausgebildet ist.

25. Anordnung nach einem der Ansprüche 1 bis 19, dadurch gekennzeichnet, daß zwischen dem Objektiv (1014) und einem Binokulartubus eine Kippspiegelanordnung vorgesehen ist, die die stereoskopischen Teilstrahlengänge abwechselnd dem einen und dem anderen Betrachterauge zuordnet.

26. Anordnung nach Anspruch 25, dadurch gekennzeichnet, daß die stereoskopischen Bilder über ein mikroskopisches System durch wechselweise Ausblendung von Teilstrahlenbündeln des Beleuchtungsstrahlenbündels erzeugt werden, mit einer zur Ausblendung synchronen Zuordnung der stereoskopischen Einzelbilder zum jeweiligen Auge des Betrachters im Binokulartubus mittels einer Kippspiegelanordnung.

27. Anordnung nach Anspruch 25 oder 26, gekennzeichnet durch einen Galvanometerspiegel zur Zuordnung der stereoskopischen Einzelbilder.

28. Anordnung nach Anspruch 25 oder 26, gekennzeichnet durch eine digital schaltbare Mikrospiegelanordnung (DMD) im Abbildungsstrahlengang zwischen dem Objektiv (0) und der Tubuseinheit.

29. Anordnung nach einem der Ansprüche 25 bis 28, dadurch gekennzeichnet, daß die Spiegelanordnung (DMD) in einem Zwischenbild des Abbildungsstrahlenganges positioniert und orthogonal zur optischen Achse angeordnet ist.

30. Anordnung nach einem der Ansprüche 25 bis 29, dadurch gekennzeichnet, daß die Spiegelanordnung (DMD) im parallelen Teil des Abbildungsstrahlenganges positioniert ist.

## Claims

1. An arrangement for the stereoscopic viewing of an object (3, 703, 1013, 1210) illuminated via an illumination optical system (1209), with means for alternately producing at least two illumination sub-beams (7 and 8) from a common illumination beam, which sub-beams illuminate the object (3, 703, 1013, 1210) via the illumination optical system (1209) at different angles, and with means for associating the resulting images of the object (3, 703, 1013, 1210) alternately with the viewer's right and left eye, characterised in that in a microscope arrangement consisting of a light source, illumination optical system (1, 1209) and at least one objective (2, 704, 1014) imaging the object (3, 703, 1013, 1210), the means for alternately producing the illumination sub-beams (7 and 8) are disposed approximately in the plane of the aperture diaphragm of the microscope or an optically conjugate plane thereof, and in that a control device is provided for associating the images at a frequency above the flicker frequency of the human eye.

2. An arrangement according to claim 1, characterised in that the sub-beams (7 and 8) together include an angle corresponding approximately to the viewer's stereoscopic viewing angle.

3. An arrangement according to claim 1 or 2, characterised in that the means for alternately producing the illumination sub-beams (7 and 8) are disposed approximately in the plane of the entry pupil (21) of the objective (2, 704, 1014).

4. An arrangement according to any one of claims 1 to 3, characterised in that transmitted light illumination in the direction of the imaging objective (2, 704, 1014) of a microscope is provided by means of the light source and the illumination optical system (1, 1209).

5. An arrangement according to any one of claims 1 to 3, characterised in that reflected or incident light illumination of the object (3, 703, 1013, 1210) is provided by means of the illumination optical system (1, 1209), the illumination beam of which is introduced into the viewing ray path of a microscope via a partially transparent mirror (14).

6. An arrangement according to any one of claims 1 to 5, characterised by illumination sub-beams (22 and 23) each having a cross-section in excess of half the optically active illumination area.

7. An arrangement according to any one of claims 1 to 6, characterised in that at least one liquid crystal cell (1011) having electrically actuatable sub-zones which are alternately switched to be transparent to light are provided for the alternate production of the illumination sub-beams (7 and 8).

8. An arrangement according to claim 7, characterised in that differentially electrically actuatable sub-zones of the liquid crystal cell (1011) are provided for adaptation to different imaging objectives.

9. An arrangement according to claim 7 or 8, characterised in that a plate having a polarisation-optical path difference λ/4 is disposed in the ray path of and downstream of the liquid crystal cell (1011).

10. An arrangement according to any one of claims 1 to 6, characterised in that at least two line gratings (51, 52; 61, 62) which are displaceable in relation to one another are disposed successively in the illuminating ray path for the alternate production of the sub-beams (7 and 8) of the illumination beam, the grating lines (54) being so offset in relation to one another that on displacement different sub-zones of the grating arrangement are alternately transparent to light.

11. An arrangement according to claim 10, characterised in that the lines (54) of a sub-zone of at least one first line grating (51, 61) are offset by half the grating constant relatively to the grating lines of a second sub-zone of a second line grating (52, 62) and there is a displacement of the first line grating relative to a second line grating by half the grating constant in each case.

12. An arrangement according to any one of claims 1 to 11, characterised in that a transmission optical system for producing the image of a light source arrangement in the plane of the aperture diaphragm or an optically conjugate plane thereof is provided.

13. An arrangement according to any one of claims 1 to 12, characterised in that a video camera (5) recording the object is provided in order to associate the resulting images of the object (3, 703, 1013, 1210) alternately with the viewer's right and left eye, said video camera being followed by at least one video screen (9) on which the images of the object appear in time with the alternating illumination.

14. An arrangement according to claim 13, characterised by the provision of the video camera (5) in the ray path of the microscope after the imaging objective (2).

15. An arrangement according to any one or claims 1 to 14, characterised in that a pair of spectacles (10) is provided for the viewer to view a video screen (9) and associates one image with one eye respectively in time with the alternating illumination of the object (3).

16. An arrangement according to claim 15, characterised in that the pair of spectacles (10) is a pair of shutter spectacles with openings adapted to be changed over for a right eye and a left eye.

17. An arrangement according to claim 15, characterised in that the pair of spectacles (10) is a pair of polarisation spectacles and at least one polarisation filter switchable in time with the alternating illumination is disposed in front of the video screen (9).

18. An arrangement according to any one of claims 13 to 17, characterised in that a separate video screen is provided in front of each eye and in that images of the object are associated with the video screens in time with the alternating illumination.

19. An arrangement according to any one of claims 1 to 18, characterised in that for the purpose of associating the resulting images of the object (1013) alternately with the viewer's right eye and left eye, an image of the object (1013) is associated with the tube openings in the binocular tube of a microscope in time with the alternating illumination.

20. An arrangement according to claim 19, characterised in that a pair of shutter spectacles (10) is associated with the binocular tube.

21. An arrangement according to claim 19, characterised in that at least two line gratings (51, 52; 61, 62) which are displaceable in relation to one another are disposed in the binocular tube, their grating lines (54) being so offset in relation to one another that on displacement different sub-zones of the grating arrangement are alternately transparent to light and respectively release a tube opening.

22. An arrangement according to claim 21, characterised in that a beam splitter (1016) is provided in the binocular tube for splitting into ray paths for a right eye and a left eye, said beam splitter being followed by the line gratings.

23. An arrangement according to claim 21 or 22, characterised in that the grating lines of a sub-zone of at least one first line grating (51; 61) are offset by half the grating constant relatively to the grating lines of a second sub-zone and a displacement of the first line grating relatively to a second line grating (52, 62) is effected in each case by half the grating constant.

24. An arrangement according to any one of claims 1 to 19, characterised in that the plane (1105) spanned by the sub-beams (1107) of the illumination beam is devised so as to be rotatable about the optical axis.

25. An arrangement according to any one of claims 1 to 19, characterised in that a tipping mirror arrangement is provided between the objective (1014) and a binocular tube and alternately associates the stereoscopic sub-beams with one and other of the viewer's eyes.

26. An arrangement according to claim 25, characterised in that the stereoscopic images are produced via a microscope system by alternately stopping sub-beams of the illumination beam, the stereoscopic individual images being associated, by means of a tipping arrangement, with the viewer's respective eyes in the binocular tube in synchronism with the stopping out.

27. An arrangement according to claim 25 or 26, characterised by a galvanometer mirror for associating the stereoscopic individual images.

28. An arrangement according to claim 25 or 26, characterised by a digitally switchable micromirror arrangement (DMD) in the imaging ray path between the objective (0) and the tube unit.

29. An arrangement according to any one of claims 25 to 28, characterised in that the mirror arrangement (DMD) is positioned in an intermediate image of the imaging ray path and is disposed orthogonally to the optical axis.

30. An arrangement according to any one of claims 25 to 29, characterised in that the mirror arrangement (DMD) is positioned in the parallel part of the imaging ray path.

## Revendications

1. Dispositif pour l'observation stéréoscopique d'un objet (3, 703, 1013, 1210), éclairé à travers une optique d'éclairage (1209), avec des moyens destinés à produire alternativement au moins deux faisceaux partiels (7 et 8) de rayons d'éclairage à partir d'un faisceau commun de rayons d'éclairage, qui éclairent l'objet (3, 703, 1013, 1210) à travers l'optique d'éclairage (1209) sous des angles différents, et avec des moyens destinés à affecter les images formées de l'objet (3, 703, 1013, 1210) alternativement à l'oeil droit et à l'oeil gauche de l'observateur, caractérisé en ce que dans un agencement microscopique constitué d'une source lumineuse, d'une optique d'éclairage (1209) et d'au moins un objectif (2, 704, 1014), reproduisant l'objet (3, 703, 1013, 1210), les moyens destinés à produire alternativement les faisceaux partiels (7 et 8) de rayons d'éclairage sont disposés à peu près dans le plan du diaphragme d'ouverture du microscope ou dans un plan conjugué optiquement à celui-ci, et en ce qu'il est prévu un dispositif de commande pour l'affectation des images à une fréquence supérieure à la fréquence de papillotement de l'oeil humain.

2. Dispositif selon la revendication 1, caractérisé en ce que les faisceaux partiels (7 et 8) forment entre eux un angle qui correspond à peu près à l'angle de vision stéréo de l'observateur.

3. Dispositif selon la revendication 1 ou 2, caractérisé en ce que les moyens destinés à produire alternativement les faisceaux partiels (7 et 8) de rayons d'éclairage sont disposés à peu près dans le plan de la pupille d'entrée (21) de l'objectif (2, 704, 1014).

4. Dispositif selon l'une des revendications 1 à 3, caractérisé en ce qu'à travers la source lumineuse et l'optique d'éclairage (1209), on a un éclairage par transmission en direction de l'objectif de reproduction (2, 704, 1014) d'un microscope.

5. Dispositif selon l'une des revendications 1 à 3, caractérisé en ce qu'à travers l'optique d'éclairage (1, 1209) on a un éclairage incident de l'objet (3, 703, 1013, 1210) dont le faisceau d'éclairage est envoyé, par un miroir (14) partiellement perméable, dans le parcours des rayons d'observation d'un microscope.

6. Dispositif selon l'une des revendications 1 à 5, caractérisé par des faisceaux partiels d'éclairage (22 et 23) avec chacun une section supérieure à la moitié de la surface d'éclairage efficace optiquement.

7. Dispositif selon l'une des revendications 1 à 6, caractérisé en ce que pour produire alternativement les faisceaux partiels (7 et 8) de rayons d'éclairage, il est prévu au moins une cellule à cristaux liquides (1011) qui présente des zones partielles pouvant être commandées électriquement et qui sont commandées de manière à être alternativement transparentes.

8. Dispositif selon la revendication 7, caractérisé en ce que différentes zones partielles à commande électrique de la cellule à cristaux liquides (1011) sont prévues pour l'adaptation à différents objectifs de reproduction.

9. Dispositif selon l'une des revendications 7 ou 8, caractérisé en ce qu'une plaque avec une différence optique de polarisation de λ/4 est disposée dans le parcours des rayons derrière la cellule à cristaux liquides (1011).

10. Dispositif selon l'une des revendications 1 à 6, caractérisé en ce que pour produire alternativement les faisceaux partiels (7 et 8) du faisceau de rayons d'éclairage, il est disposé dans le parcours des rayons d'éclairage, l'une derrière l'autre, au moins deux grilles à traits (51, 52 ; 61, 62), déplaçables l'une par rapport à l'autre, dont les traits (54) sont décalés les uns par rapport aux autres, de manière que lors d'un déplacement, différentes zones partielles de l'agencement à grilles soient alternativement transparentes.

11. Dispositif selon la revendication 10, caractérisé en ce que sur au moins une première grille à traits (51, 61), les traits (54) d'une zone partielle sont décalés d'une 1/2 constante de grille par rapport aux traits d'une deuxième zone partielle d'une deuxième grille à traits (52, 62), et en ce qu'on a un déplacement dans chaque cas d'une 1/2 constante de grille de la première grille à traits par rapport à la deuxième grille à traits.

12. Dispositif selon l'une des revendications 1 à 11, caractérisé en ce qu'une optique de transmission est prévue pour produire l'image d'un agencement de source lumineuse dans le plan du diaphragme d'ouverture ou dans un plan conjugué optiquement à celui-ci.

13. Dispositif selon l'une des revendications 1 à 12, caractérisé en ce que, pour affecter les images qui se forment de l'objet (3, 703, 1013, 1210) alternativement à l'oeil droit et à l'oeil gauche de l'observateur, il est prévu un caméra vidéo (5) filmant l'objet, derrière laquelle est disposé au moins un écran (9) sur lequel les images de l'objet se forment au rythme de l'éclairage alternatif.

14. Dispositif selon la revendication 13, caractérisé par le fait que la caméra vidéo (5) est disposée dans le parcours des rayons du microscope après l'objectif de reproduction (2).

15. Dispositif selon l'une des revendications 1 à 14, caractérisé en ce que pour observer un écran (9), l'observateur dispose de lunettes (10) qui affectent dans chaque cas une image à un oeil, au rythme de l'éclairage alternatif de l'objet (3).

16. Dispositif selon la revendication 15, caractérisé en ce que les lunettes (10) sont des lunettes shutter avec des ouvertures commutables pour un oeil droit et un oeil gauche.

17. Dispositif selon la revendication 15, caractérisé en ce que les lunettes (10) sont des lunettes de polarisation et devant l'écran (9) est disposé au moins un filtre de polarisation qui peut être commandé au rythme de l'éclairage alternatif.

18. Dispositif selon l'une des revendications 13 à 17, caractérisé en ce que devant chaque oeil se trouve un écran séparé et en ce que les images de l'objet sont affectées aux écrans au rythme de l'éclairage alternatif.

19. Dispositif selon l'une des revendications 1 à 18, caractérisé en ce que, pour affecter les images qui se forment de l'objet (1013) alternativement à l'oeil droit et à l'oeil gauche de l'observateur, une image de l'objet (1013) est affectée dans chaque cas, dans le tube du binoculaire du microscope, aux ouvertures du tube, au rythme de l'éclairage alternatif.

20. Dispositif selon la revendication 19, caractérisé en ce que des lunettes shutter (10) sont affectées au tube du binoculaire.

21. Dispositif selon la revendication 19, caractérisé en ce que dans le tube du binoculaire sont disposées au moins deux grilles à traits (51, 52 ; 61, 62) déplaçables l'une par rapport à l'autre, dont les traits (54) sont décalés les uns par rapport aux autres de manière que lors d'un déplacement, différentes zones partielles de l'agencement à grilles soient alternativement transparentes et dégagent chacune une ouverture du tube.

22. Dispositif selon la revendication 21, caractérisé en ce que dans le tube du binoculaire est prévu un diviseur de rayons (1016) pour la division dans les faisceaux de rayons, pour un oeil droit et un oeil gauche, diviseur de rayons derrière lequel se situent les grilles à traits.

23. Dispositif selon la revendication 21 ou 22, caractérisé en ce que sur au moins une première grille à traits (51 ; 61), les traits d'une zone partielle sont décalés d'une 1/2 constante de grille par rapport aux traits d'une deuxième zone partielle et il se produit un déplacement dans chaque cas d'une 1/2 constante de grille de la première grille à traits par rapport à la deuxième grille à traits (52, 62).

24. Dispositif selon l'une des revendications 1 à 19, caractérisé en ce que le plan (11, 5) défini par les faisceaux partiels (1107) du faisceau de rayons d'éclairage, est réalisé de manière à pouvoir tourner autour de l'axe optique.

25. Dispositif selon l'une des revendications 1 à 19, caractérisé en ce qu'il est prévu, entre l'objectif (1014) et un tube de binoculaire, un agencement de miroirs basculants qui affecte les rayons partiels stéréoscopiques alternativement à un oeil et à l'autre oeil de l'observateur.

26. Dispositif selon la revendication 25, caractérisé en ce que les images stéréoscopiques sont produites à travers un système microscopique par suppression alternative de faisceaux de rayons partiels du faisceau de rayons d'éclairage, avec une affectation synchrone à la suppression des images individuelles stéréoscopiques, à l'oeil concerné de l'observateur dans le tube du binoculaire, au moyen d'un agencement de miroirs basculants.

27. Dispositif selon la revendication 25 ou 26, caractérisé par un miroir à galvanomètre pour l'affectation des images individuelles stéréoscopiques.

28. Dispositif selon la revendication 25 ou 26, caractérisé par un agencement de miroirs microscopiques à commande numérique (DMD) dans le parcours des rayons de reproduction, entre l'objectif (O) et l'ensemble à tubes.

29. Dispositif selon l'une des revendications 25 à 28, caractérisé en ce que l'agencement de miroirs (DMD) est positionné dans une image intermédiaire du parcours des rayons de reproduction et est disposé perpendiculairement à l'axe optique.

30. Dispositif selon l'une des revendications 25 à 29, caractérisé en ce que l'agencement de miroirs (DMD) est positionné dans la partie parallèle du parcours des rayons de reproduction.
